# EUROPÄISCHE PATENTSCHRIFT

(11) **EP 0 840 675 B1**
(45) Veröffentlichungstag und Bekanntmachung des Hinweises auf die Patenterteilung: **18.04.2001**
(21) Anmeldenummer: 96919571.8
(22) Anmeldetag: 24.05.1996
(51) Int. Cl.: B29C 63/02, B60J 11/00

(54) **TRENNSCHICHTVERFAHREN BEI FLÄCHIGER BESCHICHTUNG VON GLATTEN OBERFLÄCHEN (GERADE ODER GEKRÜMMT) MIT SELBSTKLEBEFOLIE**
SEPARATION LAYER METHOD FOR THE FLAT COATING OF SMOOTH SURFACES (STRAIGHT OR CURVED) WITH SELF-ADHESIVE FOIL
PROCEDE DE COUCHE DE SEPARATION S'UTILISANT DANS LE REVETEMENT EN NAPPE DE SURFACES LISSES (RECTILIGNES OU COURBES) AVEC UN FILM AUTO-ADHESIF

(43) Veröffentlichungstag der Anmeldung: 13.05.1998
(73) Patentinhaber: Atlas Vertriebs GmbH, 81671 München (DE)
(72) Erfinder: KLINGER, Georg, D-85457 Wörth (DE); KLINGER, Hubert, D-81667 München (DE)
(74) Vertreter: von Willich, Werner, Dipl.-Phys.
(86) Internationale Anmeldenummer: DE9600900
(87) Internationale Veröffentlichungsnummer: WO9745248

(56) Entgegenhaltungen:
- EP-A- 0 580 037
- WO-A-96/11116
- DE-A- 3 610 656
- DE-C- 4 442 670
- FR-A- 2 591 195
- GB-A- 2 033 947
- US-A- 4 923 545

## Beschreibung

Die gängige Applikationshilfe, um Selbstklebefolien luftblasenfrei und ohne Falten auf größer Flächen aufzubringen, besteht darin, die zu beschichtende Oberfläche mit Wasser ( meist mit Seife o. ä. entspannt ) anzufeuchten; die Anfangshaftung der darauf applizierten Folie ist stark reduziert, das Folienstück kann noch genau angepaßt werden. Mit einem Rakel werden Luftblasen und Wasser ausgestrichen. Dieses Verfahren eignet sich nicht für die Beschichtung / Beklebung gekrümmter und nicht horizontaler Oberflächen:
an Krümmungen, Kanten, Biegungen usw. wird die Folie gezogen oder mittels Heißluft verformt; damit sie sich nicht zurückverformt, muß sie an diesen Stellen sofort mit voller Haftung kleben. Wasser als Trennschicht auf gekrümmten und nicht horizontalen Oberflächen ließe sich nicht fixieren ( es verläuft ) und würde die Haftung der Folie an Stellen, an denen sie die volle Haftung benötigt, reduzieren oder verhindern.

Von Seiten der Selbstklebefolien-Hersteller wird über die Zusammensetzung des Klebers oder durch Zusätze zum Kleber versucht, die Anfangshaftung zu reduzieren und das Rausstreichen der Restluft unter der Folie zu ermöglichen:
eine Schicht feinster Glaskügelchen auf der Kleberschicht schafft gewissermaßen einen Abstandshalter; erst durch das Anpressen mit dem Rakel werden diese Kügelchen in den Kleber gedrückt, der dann seine Klebekraft entfaltet; verschiedene Kleber sind in ihrer Zusammensetzung so beschaffen, daß sie zuerst eine geringe Anfangshaftung aufweisen, die sich jedoch nach einer gewissen Zeit erhöht.
Die Nachteile dieser Verfahren liegen in der relativ aufwendigen Herstellung und den damit verbundenen Kosten.

Beispiele für verschiedene Klebefolien sind in der GB-A-2 033 947, US-A-4 923 545 und EP-A-0 580 037 beschrieben.

Aufgabe der Erfindung ist es, ein Trennverfahren zu entwickeln, das mehreren Ansprüchen gerecht wird:
- die Selbstklebefolie soll mit einer geringen Anfangshaftung auf die zu beschichtende Oberläche gelegt werden können, um ein genaues Applizieren zu ermöglichen ( man soll sie leicht wieder abnehmen und korrigiert wieder auflegen können);
- das Trennmittel soll ohne großen Aufwand aufgetragen werden können;
- das Trennmittel soll nicht verlaufen können und soll sich flächig auf glatte Oberlächen, auch auf gekrümmte, unebene und nicht horizontale, nach Vorgabe des Anwenders auftragen lassen;
- durch die Anwendung des Trennmittels sollen sich die beim Applizieren unter der Folie befindlichen Luftblasen mit dem Rakel ausstreichen lassen;
- die volle Haftung der Folie soll nur an den Randbereichen der jeweiligen Oberfläche wirken ( Ausnahme: Stellen, an denen die Folie verformt wurde und ebenfalls eine große Haftung benötigt). Die Haftung der Folie auf den restlichen Flächenbereichen soll reduziert sein, um das spätere Entfernen der Folie zu erleichtern.

Diese Aufgabe wird durch das Verfahren gemäß Anspruch 1 gelöst.
Eine zweckmäßige Weiterbildung der Erfindung ist im abhängigen Anspruch 2 beschrieben.

Durch die Anwendung der in den Patentansprüchen dargelegten Verfahrensweise lassen sich diese Vorgaben realisieren:
- Öle / Fette oder ölhaltige / fetthaltige Substanzen vermindern die Anfangshaftung des Folienklebers; das aufgelegte Folienstück kann wieder leicht abgenommen werden und korrigiert wieder appliziert werden;
- bei richtiger Temperatur lassen sich die gerade erwähnten Substanzen leicht auf die zu beschichtenden Oberflächen auftragen;
- bedingt durch ihre Zähflüssigkeit können sie nicht verlaufen;
- Luftblasen unter der Selbstklebefolie lassen sich mit einem Rakel an den Rand der beschichteten Oberläche rausstreichen;
- die verminderte Haftung, die sich durch den Auftrag der in den Patentansprüchen erwähnten Trennmittel auf die jeweiligen Oberflächenbereiche ergibt, erleichtert das spätere Entfernen der Folienbeschichtung;

### ANWENDUNGSBEISPIEL

Das in den Patentansprüchen beschriebene Verfahren kann vorwiegend in der Komplett-Beschichtung von Personenkraftwagen angewandt werden, speziell im Taxi-Bereich.
Hier werden Fahrzeuge, deren Außenfarbe durch den Gesetzgeber in bezug auf den Einsatz im Beförderungsverkehr festgelegt ist, komplett mit Selbstklebefolie im vorgeschriebenen Farbton beschichtet. Bei Verkauf des Fahrzeugs wird die Folie wieder entfernt. Die Technik der Folienbeschichtung ermöglicht Taxiunternehmen einen farb-neutralen Kfz-Einkauf und somit auch eine bessere Verwertung der Gebrauchtfahrzeuge.
Durch die Anwendung des in den Patentansprüchen dargestellten Verfahrens wird das Aufbringen der Folienbeschichtung und später das Entfernen erleichtert.

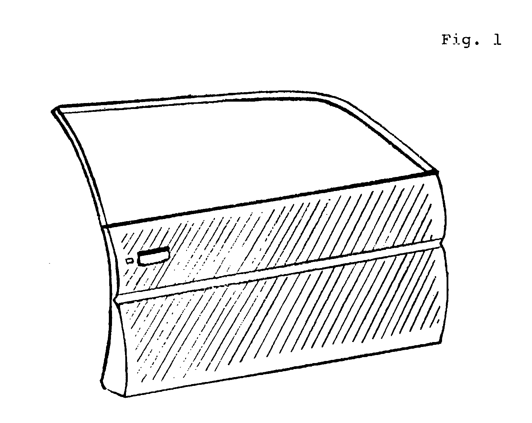

Trennmittelauftrag auf eine mit Selbstklebefolie zu beschichtende Fahrzeugtüre ( PKW) - Zeichnung siehe Fig.1 : die Randbereiche der Türfläche, die Sicke und die Türgriffmulde werden von der ansonsten flächig aufgetragenen Trennmittelbeschichtung ausgespart, da hier eine hundertprozentige Haftung der Folie erforderlich ist; auf den übrigen Flächenbereichen ist die Haftung der Folie reduziert, was das Entfernen der Folienbeschichtung erleichtert.

## Patentansprüche

1. Verfahren zum Auftragen von Selbstklebefolien auf Kraftfahrzeuge jeglicher Art,
dadurch gekennzeichnet, daß vor dem Bekleben des Kraftfahrzeuges mit der Selbstklebefolie ein Trennmittel flächig auf die mit er Selbstklebefolie zu beklebende Oberläche des Kraftfahrzeugs aufgetragen wird, wobei die Randbereiche und weitere einzelne Bereiche der zu beklebenden Oberfläche vom Trennmittelauftrag ausgespart bleiben.

2. Verfahren nach Anspruch 1,
dadurch gekennzeichnet, daß als Trennmittel
- mineralische und synthetische Öle und Fette
- flüssige oder cremige Produkte, die Öle oder Fette enthalten
verwendet werden.

## Claims

1. A method for the application of self-adhesive foils onto motor vehicles of any kind,
characterized in that prior to the coating of the motor vehicle with the self-adhesive foil a parting agent is applied flatly to the surface to be coated with the self-adhesive foil of the motor vehicle, wherein the perimeter and further certain areas of the surface to be coated are left free from the application of the parting agent.

2. A method according to claim 1,
characterized in that as a parting agent are used
- mineral and synthetic oils and greases
- fluid or creamy products which contain oils or greases.

## Revendications

1. Procédé pour appliquer des feuilles autocollantes sur des véhicules automobiles de n'importe quel type,
caractérisé en ce qu'
- avant d'apposer la feuille autocollante sur le véhicule, on applique en surface un agent de séparation sur la surface du véhicule destinée à recevoir la feuille autocollante,
- on laisse, sans appliquer d'agent séparateur, les zones marginales et d'autres zones isolées de la surface destinée à recevoir la feuille.

2. Procédé selon la revendication 1,
caractérisé en ce que
comme agent séparateur, on utilise
- des huiles ou des graisses minérales et synthétiques,
- des produits liquides ou crémeux contenant des huiles ou des graisses.
